# EUROPEAN PATENT APPLICATION

(11) **EP 1 705 612 A1**
(43) Date of publication of application: **27.09.2006**
(21) Application number: 05703554.5
(22) Date of filing: 13.01.2005
(51) Int. Cl.: G06T 7/20, G01J 5/10

(54) **INFORMATION RECOGNITION DEVICE, INFORMATION RECOGNITION METHOD, INFORMATION RECOGNITION PROGRAM, AND ALARM SYSTEM**

(30) Priority: 15.01.2004 JP 2004008240
(71) Applicant: Asahi Kasei Kogyo Kabushiki Kaisha, Osaka-shi, Osaka 530-8205 (JP)
(72) Inventor: UDAGAWA, Ken, Isehara-shi, Kanagawa 2591126 (JP); SHOZAKAI, Makoto, Atsugi-shi, Kanagawa 2430216 (JP); YAMAZAKI, Yuji, Ebina-shi, Kanagawa 2430422 (JP)
(74) Representative: Blake, John Henry Francis
(86) International application number: PCT/JP2005/000315
(87) International publication number: WO 2005/069222

(57) **Abstract**

Provided are an information recognition device, an information recognition method, and an information recognition program capable of recognizing predetermined information associated with an object-to-be-detected according to output of thermal radiation detection means for an object-to-be-detected existing in a detection range and a behavior pattern model corresponding to the output of the thermal radiation sensor corresponding to behavior patterns of objects prepared in advance by using a predetermined modeling method. The information recognition device 1 includes an infrared detection unit 10, a behavior pattern model generation unit 11, a behavior pattern model storage unit 12, and a recognition unit 13. The infrared detection unit 10 has a pyroelectric infrared sensor 10a and a signal processor 10b. The behavior pattern model generated is correlated to the behavior content and the attribute information and stored in the behavior pattern model storage unit 12. Information on an object-to-be-detected is recognized according to the output of the infrared detection unit 10 and the behavior pattern model.

## Description

### Technical Field

The present invention relates to an information processing using a thermal radiation sensor, and more specifically to an information recognition device, an information recognition method, and an information recognitionprogram, andanalarmsystemhavingthe information recognition device capable of recognizing predetermined information associated with an object-to-be-detected, according to output of thermal radiation detection means for an object-to-be-detected existing in a detection range and behavior pattern model corresponding to the output of the thermal radiation sensor corresponding to behavior patterns of a plurality of objects prepared in advance by using a predetermined modeling method.

### Background Art

Conventionally, there has been a human body movement direction discrimination device disclosed by the patent document 1 as the technology of discriminating the movement direction of a human body using human body detection means such as a pyroelectric infrared sensor, etc.

When one of two human body detection means having plural human body detection ranges continuously detects a human body in plural human body detection ranges, human body movement direction discrimination device discriminates the movement direction of a human body depending on which of the two human body detection means has detected the human body. Upon receipt of the output of the discrimination, report means presents a report depending on the discriminated human body movement direction. When one of the two human body detection means continuously detects a human body in plural human body detection ranges, first detection control means nullifies the output of the detection of the other human body detection means for a predetermined time. When one of the two human body detection means detects a human body in only one of the plural human body detection ranges, a second detection control means nullifies the output of the detection of the other human body detection means. Thus, a quick and correct report of the movement direction can be presented.

There has another conventional system for security using a sensor capable of detecting a human body for detecting that a person has invaded a building to be guarded and notifying a guard of the detection result. In this security system, a guard who has received a notification takes action by rushing to the spot, etc.

Patent Document 1: Patent Publication No. 2766820

However, since each process such as determining process, etc. is performed based only on whether or not two human body detection means have detected a human body in the above-mentioned conventional technology according to the patent document 1, they can only determine a simple action content such as the movement direction of a human body.

Furthermore, since as the means are called "human body detection means", a detection target is limited only to a human body, and there is the possibility that the means can work when an animal such as a cat, a dog, etc. traverses. Additionally, they cannot determine the type of an object-to-be-detected or the action of an object other than a person when an animal, etc. invades a building, etc. This also holds true with the above-mentioned conventional security system. Since a human body detecting sensor cannot discriminate a person from an animal such as a cat, a dog, etc., and when an animal invades a building, the sensor discriminates that a person has invaded the building and transmits a wrong notification to a guard, thereby causing the problem that a guard rushes to the spot only to find the invasion of an animal.

On the other hand, the inventor of the present invention has detected thermal radiation emitted by a number of objects-to-be-detected taking the same action in a detection range of a pyroelectric infrared sensor. As a result, the inventor of the present invention has detected that each type of object-to-be-detected (person, animal, each sex, etc.), an individual (for example, a person A, B, etc.) in the same type of object-to-be-detected, etc. has unique output from the pyroelectric infrared sensor.

Then, the present invention has been developed to solve the problem of the above-mentioned conventional technology, and takes notice of the output characteristic of the pyroelectric infrared sensor, and aims at providing an information recognition device, an information recognition method, and an information recognition program, and an alarm system having the information recognition device capable of recognizing predetermined information associated with an object-to-be-detected, according to output of thermal radiation detection means for an object-to-be-detected existing in a detection range and behavior pattern model corresponding to the output of the thermal radiation sensor corresponding to behavior patterns of objects prepared in advance by using a predetermined modeling method.

### Disclosure of Invention

To attain the above-mentioned objectives, the information recognition device according to claim 1 of the present invention includes:
thermal radiation detection means for detecting, by a thermal radiation sensor, the thermal radiation emitted from an object-to-be-detected existing in a detection range;
behavior pattern model storage means for storing a behavior pattern model obtained by modeling output of the thermal radiation sensor depending on a behavior pattern of an object-to-be-detected by using a predetermined modeling method; and
information recognition means for recognizing predetermined information relating to the object-to-be-detected existing in the detection range based on a detection result of the thermal radiation detection means and the behavior pattern model stored in the behavior pattern model storage means.

With the configuration, the thermal radiation detection means can detect thermal radiation emitted from an object-to-be-detected existing in a detection range using a thermal radiation sensor, the behavior pattern model storage means can store a behavior pattern model obtained by modeling in advance the output of the thermal radiation sensor depending on a behavior pattern of the object-to-be-detected by using a predetermined modeling method, and information recognition means can recognize predetermined information relating to the object-to-be-detected existing in the detection range based on a detection result of the thermal radiation detection means and the behavior pattern model stored in the behavior pattern model storage means.

Therefore, based on the detection result of the thermal radiation sensor and the behavior pattern model, the predetermined information about the object-to-be-detected can be recognized. As a result, various types of information such as a complicated action pattern of an object-to-be-detected, the attribute of an object-to-be-detected, etc. can be recognized.

An object-to-be-detected can be anything that emits thermal radiation, for example, a person, other lives such as an animal, an insect, etc. other than a person, nonlife, etc.

A thermal radiation sensor can be anything that detects heat emitted from an object-to-be-detected. For example, an infrared sensor for detecting infrared emitted from an object-to-be-detected can be a quantum sensor using a photovoltaic effect or a photoconductive effect, or a thermo-sensor using a thermoelectromotive effect, a pyroelectric effect, a pyroconductive effect, etc.

A predetermined modeling method can be, for example, a well-known HMM, a neural network, etc.

Predetermined information about an object-to-be-detected can be the information about the behavior content of an object-to-be-detected in a detection range, an attribute (sex, animal, insect, etc.) of the object-to-be-detected, etc.

The invention according to claim 2 is based on the information recognition device described in claim 1, wherein the behavior pattern model storage means stores plural behavior pattern models depending on respective types of behavior patterns.

That is, since a recognizing process can be performed based on plural behavior pattern models depending on the respective types of behavior patterns and a detection result, various types of information about an object-to-be-detected in the detection range can be recognized.

The invention according to claim 3 is based on the information recognition device described in claim 1 or 2, and includes behavior pattern model generation means for generating the behavior pattern model of the object-to-be-detected based on the output of the thermal radiation sensor by using the predetermined modeling method.

That is, the behavior pattern model generation means can generate the behavior pattern model of the object-to-be-detected based on the output of the thermal radiation sensor by using the predetermined modeling method.

Therefore, a new behavior pattern model can be easily added, and since a behavior pattern model can be generated depending on a given condition, flexible action can be taken in changing a behavior pattern model by changing the contents of recognition.

The invention according to claim 4 is based on the information recognition device described in one of claims 1 to 3, and the thermal radiation sensor is a thermo-sensor.

That is, the thermal radiation sensor is constituted by a sensorusinga thermoelectromotive effect using a thermopile, etc., a sensor using a pyroelectric effect by using PZT (zirconate titanate lead), LiTaO3 (tantalic lithium), etc., a sensor using a thermocouple effect by using a thermistor, a bolometer, etc.

The invention according to claim 5 is based on the information recognition device described in one of claims 1 to 3, and the thermal radiation sensor is a quantum sensor.

That is, the thermal radiation sensor is constituted by a quantum sensor such as a sensor using a photovoltaic effect by using a photodiode, a phototransistor, a photo IC, a solar cell, etc., a sensor using a photoconductive effect by using a CdS cell, a CdSe cell, a PdS cell, etc., a sensor using a photoemission effect by using a photoelectric tube, a photomultiplier tube, etc.

The invention according to claim 6 is based on the information recognition device described in claim 4, and the thermo-sensor is a pyroelectric infrared sensor for detecting infrared emitted from the object-to-be-detected using a pyroelectric effect.

That is, since a pyroelectric infrared sensor is used as a thermal radiation sensor, a moving object in a detection range can be easily detected.

The invention according to claim 7 is based on the information recognition device described in one of claims 1 to 6, and the predetermined modeling method is an HMM (Hidden Markov Model).

That is, by modeling the behavior pattern using the HMM as a probability model of a time series signal, an unsteady time series signal can be easily modeled. Therefore, the behavior pattern of an object-to-be-detected can be appropriately modeled.

The invention according to claim 8 is based on the information recognition device described in any of claims 1 to 7, and the predetermined information includes at least one of action contents of the obj ect-to-be-detected, amoving speed of the object-to-be-detected, and a size of the object-to-be-detected.

That is, since the output of the thermal radiation sensor changes depending on the action content, the moving speed, the size, etc., a behavior pattern model corresponding to them is generated in advance, thereby recognizing the action content of an object-to-be-detected, the moving speed, the size, etc.

The action content of an object-to-be-detected can be, for example, the movement in a certain direction, a behavior (gesture, etc.) of a part of the body such as a hand, a leg, etc.

The size can be the height, width, length, surface area, volume, etc. They are not limited for the entire object-to-be-detected, but can be for a part of an object-to-be-detected.

The invention according to claim 9 is based on the information recognition device described in any of claims 1 to 8, and the predetermined information includes attribute information about the object-to-be-detected.

That is, the information recognition means can recognize the attribute information about the object-to-be-detected in the detection range.

The attribute information is, for example, the information globally about lives emitting heat such as a person, animals (mammals) other than persons, an insect, etc., nonlives emitting heat of warm wind and cold wind of a vehicle, a bike, a curtain, solar light, a light, an air-conditioner, etc.

The information about nonlives not emitting heat such as the movement of a curtain, branches, leaves, etc. can be included in the attribute information. The recognition of the predetermined information about a nonlife not emitting heat can be performed by a combination with an obj ect emitting heat. For example, when there is a thermal radiation sensor on one side of a curtain, and there is a heat source on the other side, the heat emitted from the heat source is not detected by the sensor when the heat source is covered with the curtain. When the curtain is moved and the heat source is disclosed, the heat emitted from the heat source is detected by the sensor. This phenomenon is utilized. That is, by comparing the detection result with the behavior pattern, it can be determined whether the event refers to the movement of a curtain or the invasion of a person into a building.

On the other hand, locally, for a person, there is the information about the type of person, for example, a man, a woman, an adult, a child, etc. For an animal, there is the information about the type of a dog, a cat, a rat, a bird, etc. For an insect, there is the information about the type of a butterfly, a spider, a grig, a beetle, a stag beetle, etc. Furthermore, the specific information about each type is described. Furthermore, the lives other than persons can also be type-divided as with the persons.

When the attribute information is individual information, a person can be identified for an individual, and an insect and an animal can be identified for an individual.

The invention according to claim 10 is based on the information recognition device described in any of claims 1 to 9, and the information recognition means extracts feature data from a detection result of the thermal radiation detection means, calculates likelihood between the feature data and the behavior pattern model based on the feature data and the behavior pattern model stored in the behavior pattern model storage means, and recognizes the predetermined information relating to the obj ect-to-be-detected based on the calculated likelihood.

That is, the likelihood between the feature data and the behavior patternmodel is calculated. Based on the likelihood, the predetermined information relating to the object-to-be-detected is recognized, thereby easily recognizing predetermined information.

The invention according to claim 11 is based on the information recognition device described in claim 10, and the feature data includes first feature data constituted by a spectrum in a frame unit of a detection result of the thermal radiation detection means and second feature data constituted by an average amplitude value of the spectrum in the frame unit.

That is, the likelihood of the behavior pattern model for the first feature data constituted by the spectrum in a frame unit of a detection result and the second feature data constituted by an average amplitude value of the spectrum in the frame unit is calculated, and the predetermined information relating to the object-to-be-detected is recognized based on the calculation result, thereby improving the recognition accuracy of the predetermined information.

The invention according to claim 12 is based on the information recognition device described in claim 11, and the first feature data is obtained by transforming a value of the spectrum in the frame unit into a value of a common logarithm.

That is, since the value of the spectrum in the frame unit is transformed into the value of a common logarithm as the first feature data, the spread range is expanded if the value of the spectrum is smaller than 1, and the spread range is reduced if it is 1 or more. Thus, depending on the condition, the recognition accuracy of the predetermined information can be furthermore improved.

The invention according to claim 13 is based on the information recognition device described in claim 11 or 12, and the feature data further includes third feature data constituted by a difference between feature indicated by the first feature data of a selected frame and feature indicated by the first feature data of the frame immediately before the selected frame.

That is, in addition to the first and second feature data, the third feature data constituted by the difference between the feature indicated by the first feature data of a selected frame and the feature indicated by the first feature data of the frame immediately before the selected frame is used to recognize the predetermined information. Therefore, the recognition accuracy of the predetermined information can be furthermore improved.

The invention according to claim 14 is based on the information recognition device described in claim 13, and the feature data further includes fourth feature data constituted by a difference between feature indicated by the second feature data of a selected frame and feature indicated by the second feature data of the frame immediately before the selected frame.

That is, in addition to the first to third feature data, the fourth feature data constituted by the difference between the feature indicated by the second feature data of the selected frame and the feature indicated by the second feature data of the frame immediately before the selected frame is used to recognize the predetermined information, thereby furthermore improving the recognition accuracy of the predetermined information.

The invention according to claim 15 is based on the information recognition device described in any of claims 1 to 14. When the behavior pattern model is constituted by the feature data of a high dimension of four or more, the device includes:
feature data display means for displaying the feature data corresponding to each behavior pattern model stored in the behavior pattern model storage means as a coordinate point in a two- or three-dimensional space; and
detection result display means for displaying a coordinate point corresponding to a detection result of the thermal radiation detection means in a space in which the coordinate point of the feature data is displayed.

That is, when the behavior pattern model is constituted by the feature data of a high dimension of four or more, the feature data display means can display the feature data corresponding to each behavior pattern model stored in the behavior pattern model storage means as a coordinate point in the two- or three-dimensional space, and the detection result display means can display a coordinate point corresponding to the detection result of the thermal radiation detection means in the space in which the coordinate point of the feature data is displayed.

Therefore, a detection result can be visually understood by comparing it with the feature data corresponding to the behavior patterns of other plural objects-to-be-detected, and predetermined information can be visually recognized.

The information recognition method according to claim 16 of the present invention includes:
detecting, by a thermal radiation sensor, thermal radiation emitted from an object-to-be-detected existing in a detection range;
preparing a behavior pattern model obtained by modeling output of the thermal radiation sensor depending on plural types of behavior patterns of plural objects-to-be-detected by using a predetermined modeling method; and
recognizing predetermined information relating to the object-to-be-detected existing in the detection range based on a detection result of the thermal radiation sensor and the behavior pattern model.

The present invention can be realized by an information recognition device, etc. described in claim 1. Since the effects of the invention are the same as those described above, the explanation is omitted here.

The information recognition program according to claim 17 of the present invention includes:
a thermal radiation detecting step of detecting, by a thermal radiation sensor, thermal radiation emitted from an object-to-be-detected existing in a detection range;
a behavior pattern model storing step of storing a behavior pattern model obtained by modeling output of the thermal radiation sensor depending onplural types of behavior patterns of plural objects-to-be-detected by using a predetermined modeling method; and
an information recognizing step of recognizing predetermined information relating to the object-to-be-detected existing in the detection range based on a detection result in the thermal radiation detecting step and the behavior pattern model stored in the behavior pattern model storing step.

The present invention is a program that can be applied to the information recognition device described in claim 1. Since the effects of the invention are the same as those described above, the explanation is omitted here.

To attain the above-mentioned obj ective, the alarm system described in claim 18 includes the information recognition device described in any of claims 1 to 15;
determination means for determining whether or not the object-to-be-detected is a person based on the recognition result of the information recognition device; and
alarm means for raising an alarm when the determination means determines that the object-to-be-detected is a person.

With the above-mentioned configuration, the determination means can determine whether or not the object-to-be-detected is a person based on the recognition result of the information recognition device, and the alarm means can raise an alarm when it is determined that the object-to-be-detected is a person.

Therefore, based on the recognition result of the information recognition device capable of recognizing various types of information such as a complicated action pattern of an object-to-be-detected, an attribute of the object-to-be-detected, discrimination between a person and an animal, etc. can be performed. Therefore, the present system can be used for guard of a building at a lower frequency of raising an erroneous alarm by mistakenly determining the invasion of an animal, etc. other than a person into a building.

The "raising an alarm" refers to giving an alarm message by voice through a speaker, etc., continuously providing peculiar sound such as a buzzer sound, etc., and includes an alarm as a threat and a warning to be given to an invader, and an alarm to a system user about the danger to be directly given to the system user by voice or on the screen display when the invasion of a person into a building is detected. The alarm to an invader and the alarm to a system user can be used independently of collectively.

### Brief Description of the Drawings

Figure 1 is a block diagram of the configuration of the information recognition device according to the present invention;
Figure 2A shows the mounting position of an information recognition device 1, Figure 2B shows the detection range of a pyroelectric infrared sensor 10a; and Figure 2C shows a behavior pattern of the object to be detected;
Figure 3 shows the relationship between the output waveform of the pyroelectric infrared sensor 10a and the behavior pattern model;
Figure 4 is a flowchart of the operating process of an infrared detection unit 10;
Figure 5 is a flowchart of the operating process of a behavior pattern model generation unit 11;
Figure 6 is a flowchart of an operating process of a recognition unit 13;
Figure 7 shows the recognition result in the behavior direction according to an embodiment of the present invention;
Figure 8 shows an example of segmenting a detection range 20 into small ranges;
Figure 9A and Figure 9B show the information about a dog as an object-to-be-detected when recognition is performed;
Figure 10A shows a recognition result of a person (by discriminating an adult from a child) and a dog (by discriminating a large dog from a small dog), and Figure 10B shows a recognition result of a person (without discrimination between an adult and a child) and a dog (without discrimination between a large dog and a small dog);
Figure 11 shows a recognition result in the behavior direction according to the third embodiment of the present invention;
Figure 12A and Figure 12B show recognition results in the behavior direction according to the fourth embodiment of the present invention;
Figure 13 shows an example of displaying a behavior pattern model in a two-dimensional projection;
Figure 14 is a flowchart of the operating process of a two-dimensional projection unit 14;
Figure 15 is a block diagram of the configuration of the alarm system according to the fourth style of embodiment of the present invention; and
Figure 16 is a flowchart of the operating process of an alarm notification control unit 50.

### Best Mode for Carrying Out the Invention

### <First Style of Embodiment>

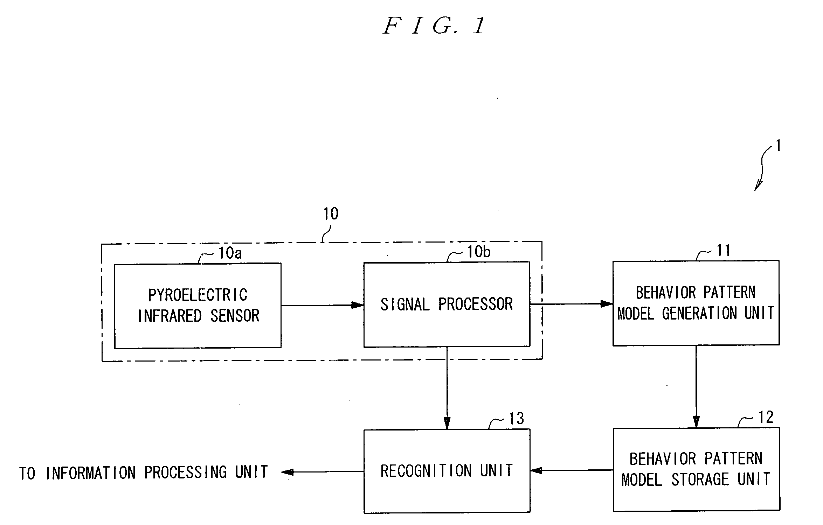

The first style of embodiment of the present invention is explained below by referring to the attached drawings. Figures 1, 2A to 2C, and 3 to 6 show the first style of embodiment of the information recognition device according to the present invention.

First, the configuration of the information recognition device according to the first style of embodiment of the present invention is explained by referring to Figure 1. Figure 1 is a block diagram showing the configuration of the information recognition device according to the first style of embodiment of the present invention.

As shown in Figure 1, the information recognition device 1 includes an infrared detection unit 10, a behavior pattern model generation unit 11, a behavior pattern model storage unit 12, and a recognition unit 13.

The infrared detection unit 10 includes a pyroelectric infrared sensor 10a and a signal processor 10b.

The pyroelectric infrared sensor 10a is a sensor capable of detecting infrared emitted from an object-to-be-detected existing in a detection range using a pyroelectric effect.

The signal processor 10b has the functions of performing a signal processing, etc. such as sampling, an FFT (fast Fourier transform), etc. on an analog signal of a detection result output from the pyroelectric infrared sensor 10a, and calculating feature data of a detection result.

The behavior pattern model generation unit 11 models the feature data acquired from the infrared detection unit 10 using the HMM and generates a behavior pattern model.

Thebehaviorpatternmodel storage unit 12 has the function of storing the generated behavior pattern model.

The recognition unit 13 has the function of recognizing the behavior pattern information about an object-to-be-detected existing in a detection range of the pyroelectric infrared sensor 10a and the attribute information based on the stored contents of the behavior pattern model storage unit 12 and the feature data of an infrared detection result acquired from the infrared detection unit 10.

In this style of embodiment, the information recognition device 1 includes a processor not shown in the attached drawings, RAM (random access memory), and a storage medium storing a dedicated program, and controls each unit by executing a dedicated program by a processor.

A storage medium is semiconductor storage medium such as RAM, ROM, etc., a magnetic storage medium such as an FD, an HD, etc., an optical reading system such as a CD, a CDV, and LD, a DVD, etc., and a magnetic/optical reading system such as an MO, etc. Regardless of the electronic, magnetic, optical and other reading methods, the storage medium can be any computer-readable storage medium.

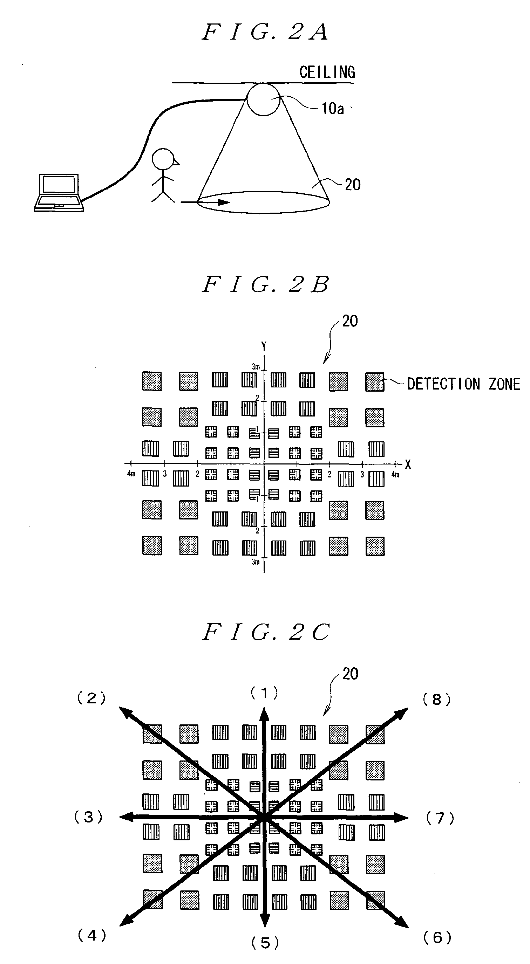

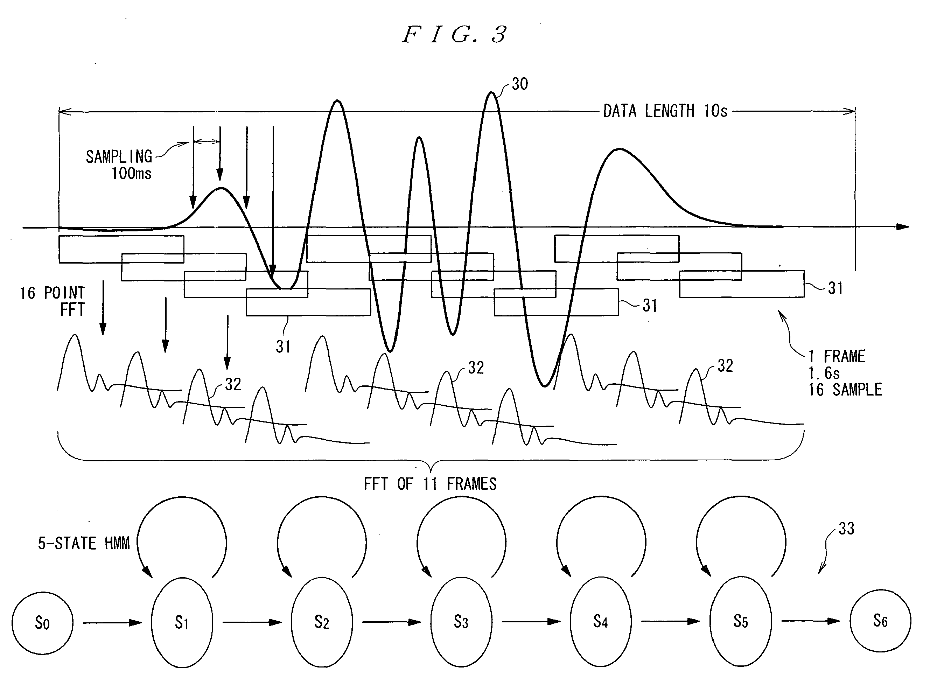

By referring to Figures 2Ato 2C, and 3 to 5, amore practical operation of the information recognition device 1 is explained below. Figure 2A shows the mounting position of the information recognitiondevice 1, Figure 2B shows the detection range of the pyroelectric infrared sensor 10a, and Figure 2C shows a behavior pattern to be detected. Figure 3 shows the relationship between the output waveform of the pyroelectric infrared sensor 10a and the behavior pattern model.

As shown in Figure 2A, the information recognition device 1 is mounted such that the pyroelectric infrared sensor 10a as its component can be attached to the ceiling of a room, etc. to detect infrared which is emitted from the object-to-be-detected and passes the detection range 20. From the detection result of the infrared which passes the detection range and detected from the object-to-be-detected, the behavior pattern and the attribute of the object-to-be-detected is recognized.

In this style of embodiment, the pyroelectric infrared sensor 10a projects four pyroelectric elements by a Fresnel lens with 16 surfaces to enlarge the detection range. The detection range 20 is determined by an x horizontal axis and a y vertical axis as shown in Figure 2B, and covers about 6 m in the x direction and about 7 m in the y direction. That is, as shown in Figure 2B, the infrared from the object-to-be-detected passing any of plural detection zones in the range can be detected.

Furthermore, according to this style of embodiment, a behavior pattern of an object-to-be-detected can be detected as an object-to-be-detected walking in the detection range 20 in each direction of (1) to (8) from outside the detection range 20 as shown in Figure 2C.

In this style of embodiment, plural objects-to-be-detected (persons in this style of embodiment) are asked to take the above-mentioned eight behavior patterns in advance (for example, each person takes each pattern five times), a detection result from the pyroelectric infrared sensor 10a obtained from the acts of the behavior patterns is signal-processed by the signal processor 10b, the feature data is calculated, and the behavior pattern model generation unit 12 models the feature data corresponding to each behavior pattern by the HMM.

Additionally, in this style of embodiment, the signal processor 10b samples an analog output signal 30 of the data time length 10 (s) from the pyroelectric infrared sensor 10a at 100 (ms) intervals as shown in Figure 3, and transforms the analog output signal 30 into digital data by performing an A/D conversion on the sampling data. Then, it divides the sampling data at the 100 (ms) intervals into plural frames 31 in a 1.6 (s)unit. Then, the FFT is performed on the sampling data in the unit of the frame 31, and the sampling data is expanded into the Fourier series, thereby calculating a spectrum (a spectrum 32 shown in Figure 3) of each harmonic. Each frame 31 corresponds to 16 pieces of sampling data, and the overlap between the frames covers 12 pieces of sampling data. According to this style of embodiment, the eight spectra 32 as the first half of each frame 31 is set as the first feature data, the average amplitude level is calculated for each frame, and defined as the second feature data.

In this style of embodiment, the behavior pattern model generation unit 11 acquires the first and second feature data from the infrared detection unit 10, and generates an HMM 33 shown in Figure 3 using these pieces of feature data.

The HMM 33 includes the first feature data as a first parameter, and the second feature data as a second parameter. Then, the number of internal states is five, that is, S₁ to S₅, and a single Gaussian is used as the probability distribution of each parameter. Furthermore, the data corresponding to the action pattern taken five times for each behavior pattern of each attribute is used for the training of the HMM 33, and each behavior pattern is modeled for each attribute. A well-known method is used for the training by the HMM.

In this style of embodiment, 17 persons as objects-to-be-detected A to Q are asked to take the above-mentioned eight behavior patterns five times for each behavior pattern, thereby generating behavior pattern models of the eight behavior patterns corresponding to each object-to-be-detected.

Furthermore, the behavior pattern model generated by the behavior pattern model generation unit 11 is stored in the behavior pattern model storage unit 12 corresponding to the attribute (for example, the name) of an obj ect-to-be-detected and the content of a behavior pattern.

Thus, when the behavior pattern models of plural objects-to-be-detected are completely generated, the recognition unit 13 afterwards performs the process of recognizing the behavior pattern of an object-to-be-detected and the attribute based on the signal processing result from the infrared detection unit 10.

For example, assume that the object-to-be-detected A walks in and passing through the detection range 20 in the direction of (6) shown in Figure 2C. Thus, the pyroelectric infrared sensor 10a detects the infrared of the object-to-be-detected A, and outputs the analog signal depending on the detection result. The analog signal is input to the signal processor 10b, the above-mentioned signal processing is performed, and the process result is input to the recognition unit 13.

The recognition unit 13 extracts similar feature data from the signal processing result corresponding to the behavior of the object-to-be-detected A, and recognizes the behavior pattern of the obj ect-to-be-detectedA and the attribute based on the feature data and the behavior pattern model stored in the behavior pattern model storage unit 12.

In this style of embodiment, the behavior pattern of the object-to-be-detected A and the attribute are recognized by detecting a model having a state transition sequence for generation of the feature data sequence (also referred to as an observation sequence) for the behavior of the obj ect-to-be-detectedA at the highest probability from among the behavior pattern models stored in the behavior pattern model storage unit 12 using the well-known Viterbi algorithm. The detecting method using the Viterbi algorithm can be a well-known method.

As described above, using the Viterbi algorithm, when a behavior pattern model corresponding to the state transition sequence at the highest probability is detected, the behavior pattern model is associated with the contents of a behavior pattern and an attribute in advance as described above. Therefore, the contents of the behavior (walking in the direction of (6) and passing through, etc.) of the object-to-be-detected A passing through in the detection range can be recognized, and furthermore, theobject-to-be-detected can be recognized as A. The recognition result is output to, for example, the display processing unit for displaying on the display unit the recognition result, and the information processing means such as an application program, etc. for performing any process using the recognition result.

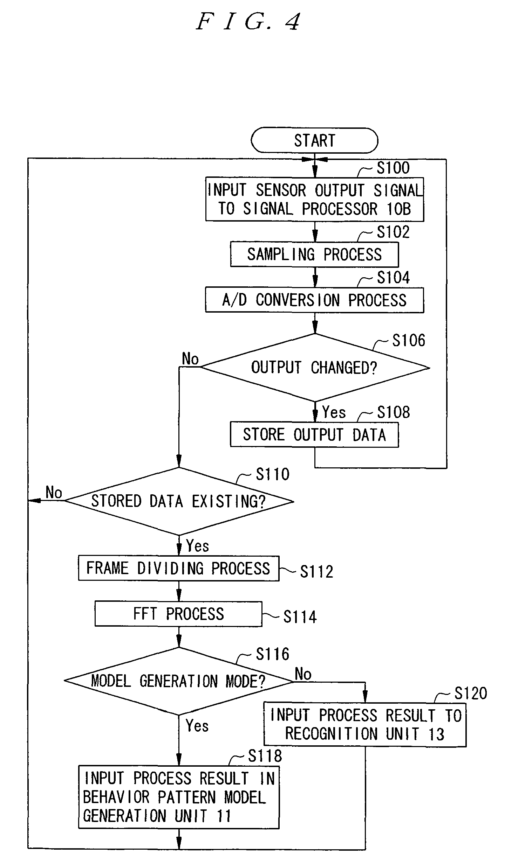

Furthermore, by referring to Figure 4, the flow of the operating process of the infrared detection unit 10 is described below. Figure 4 is a flowchart of the operating process of the infrared detection unit 10.

As shown in Figure 4, first, control is passed to step S100. In the pyroelectric infrared sensor 10a, the analog output signal of a sensor is input to the signal processor 10b, and control is passed to step S102.

When control is passed to step S102, the signal processor 10b performs a samplingprocess at predetermined time intervals (for example, 100 ms) on the acquired analog output signal, thereby passing control to step S104.

In step S104, the signal processor 10b performs the A/D conversion process on the sampling result, and control is passed to step S106.

In step S106, the signal processor 10b determines whether or not the output signal has been changed according to the output signal of the pyroelectric infrared sensor 10a treated in sampling process and the A/D conversion. When it is determined that it has been changed (YES), control is passed to step S108. Otherwise (NO), control is passed to step S110.

When control is passed to step S108, the signal processor 10b stores the A/D converted output signal in a storage unit consisting of a RAM or the like, not shown, and control is passed to step S100.

When control is passed to step S110, the signal processor 10b determines whether or not the storage unit has stored data. If it is determined there is data (YES), control is passed to step S112. Otherwise (NO), control is passed to step S100.

In step S112, the signal processor 10b performs a frame dividing process in a predetermined time unit (for example, 1.6s) on the data stored in the storage unit, and passes control to step S114.

In step S114, the signal processor 10b performs the FFT in a frame unit, calculates the spectrum of each harmonic from the result of the FFT, further calculates the average amplitude in a frame unit, and passes control to step S116.

In step S116, the infrared detection unit 10 determines whether or not the behavior mode is a generation mode of a behavior pattern model. If it is determined that the mode is the generation mode of a behavior pattern model (YES), control is passed to step S118. Otherwise (NO), control is passed to step S120.

In this style of embodiment, two modes, that is, the generation mode of the behavior pattern model and the information recognition mode, can be set. When the behavior pattern model generation mode is set, the signal processing result of the infrared detection unit 10 is input to the behavior pattern model generation unit 11. When the information recognition mode is set, the signal processing result of the infrared detection unit 10 is input to the recognition unit 13.

When control is passed to stepS118, the infrareddetection unit 10 inputs the signal processing result to the behavior pattern model generation unit 11, and control is passed to step S100.

When control is passed to step S120, the infrareddetection unit 10, the above-mentioned signal processing result is input to the recognition unit 13, and control is passed to step S100.

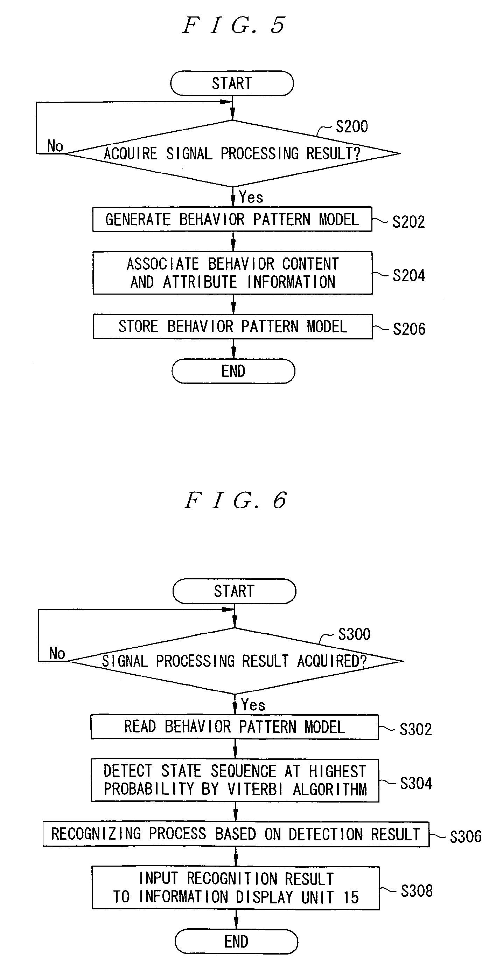

Furthermore, by referring to Figure 5, the flow of the process of operating the behavior pattern model generation unit 11 is explained below. Figure 5 is a flowchart of the operating process of the behavior pattern model generation unit 11.

As shown in Figure 5, first, control is passed to step S200, it is determined whether or not a signal processing result from the infrared detection unit 10 has been acquired. If it is determined that the result has been acquired (YES), control is passed to step 202. Otherwise (NO), the system is in a standby state until it is acquired.

In step S202, based on the acquired signal processing result, a behavior pattern model is generated using the HMM, and control is passed to step S204.

In step S204, the generated behavior pattern model is associated with the behavior contents and the attribute information, and control is passed to step S206.

In step S206, the behavior pattern model associated with the behavior contents and the attribute information is stored in the behavior pattern model storage unit 12, thereby terminating the process.

Furthermore, by referring to Figure 6, the flow of the operating process of the recognition unit 13 is explained below. Figure 6 is a flowchart of the operating process of the recognition unit 13.

As shown in Figure 6, first, control is passed to step S300, and it is determined whether or not a signal processing result has been acquired from the infrared detection unit 10. If it is determined that the result has been acquired (YES), control is passed to step S302. Otherwise (NO), the system is in the standby state until the result is acquired.

In step S302, a behavior pattern model is read from the behavior pattern model storage unit 12, and control is passed to step S304.

In step S304, based on the read behavior pattern model and the acquired signal processing result, a behavior pattern model having a state transition sequence at the highest probability is detected using the Viterbi algorithm, and control is passed to step S306.

In step S306, the recognizing process is performed based on the detected behavior pattern model, and control is passed to step S308. The recognizing process refers to reading behavior contents associated with a behavior pattern model and the attribute information as described above.

In step S308, the recognition result is output to the information processing means such as an application program, etc., thereby terminating the process.

The infrared detection unit 10 detects the infrared of plural objects-to-be-detected in the detection range 20, the signal processing is performed on the output signal of the detection result, and the behavior pattern model generation unit 11 generates a behavior pattern model corresponding to the contents of the behavior pattern of each object-to-be-detected and the attribute of the object-to-be-detected from the detection result after the signal processing using the HMM, and the model can be stored in the behavior pattern model storage unit 12.

The recognition unit 13 can recognize the behavior pattern and the attributes of an object-to-be-detected based on the infrared detection result of the object-to-be-detected operating in the detection range 20 by the infrared detection unit 10 and the behavior pattern model stored in the behavior pattern model storage unit 12.

The infrared detection unit 10 shown in Figure 1 corresponds to the thermal radiation detection means described in any of claims 1, 10, and 11. The behavior pattern model generation unit 11 corresponds to the behavior pattern model generation means described in claim 3, the behavior pattern model storage unit 12 corresponds to the behavior pattern model storage means described in any of claims 1, 2, and 10, and the recognition unit 13 corresponds to the information recognition means described in claim 1 or 10.

### <First Embodiment>

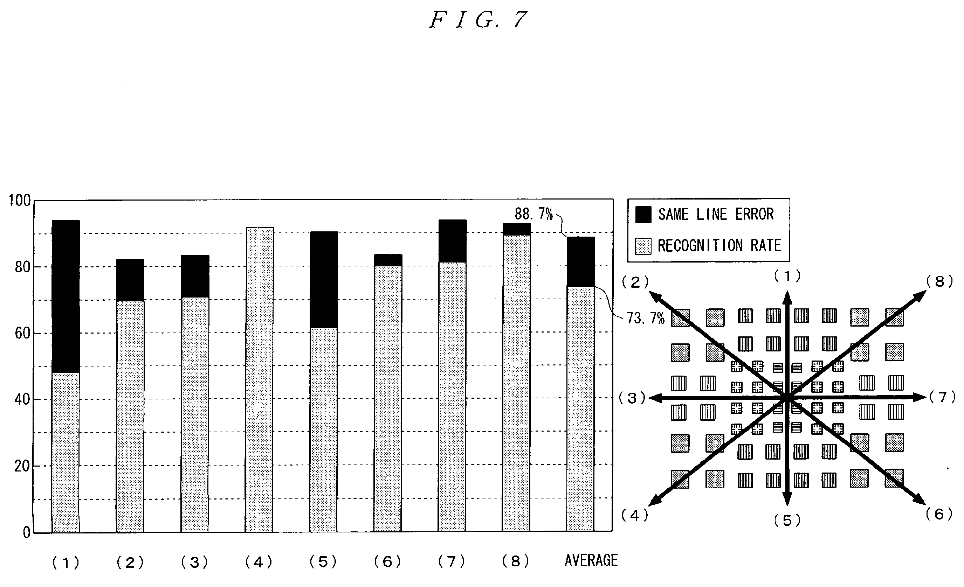

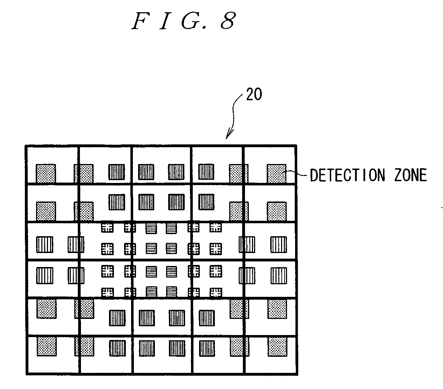

Furthermore, by referring to Figures 7 and 8, the first embodiment of the present invention in which the information recognition device 1 according to the first style of embodiment is applied to recognize the eight behavior directions (1) to (8) when the objects-to-be-detected A to Q pass in the above-mentioned detection range 20 is explained below. In this embodiment, Figure 7 shows the recognition result in the behavior direction in the first embodiment. Figure 8 shows an example of segmenting the detection range 20 into small ranges.

In the present embodiment, the HMM in 5 states is generated using a feature parameter similar to that in the first style of embodiment. Also in this example, using the data obtained by asking 17 objects-to-be-detected A to Q to perform behaviors in the eight directions (1) to (8) five times in the above-mentioned first style of embodiment. However, in the present embodiment, when the HMM is generated for each behavior pattern, the attribute of an object-to-be-detected is ignored. When a behavior pattern model in each direction is generated, all data (85 pieces by the multiplication of 17 persons x 5 times) of the five-time behaviors of 17 persons in each direction is used.

That is, in the above-mentioned style of embodiment, five pieces of data are used for each attribute in generating a behavior pattern model in each direction, thereby generating the HMM dedicated to each object-to-be-detected. However, in the present embodiment, using all data of 17 persons in each direction, the HMM corresponding to the behavior in each direction of the objects-to-be-detected of an indefinite number is generated.

In the information recognition device 1 in the first style of embodiment, using the generated behavior pattern model, the average recognition rate in the behavior direction by the passage of the objects-to-be-detectedA to Q in the detection range 20 is 73.7% with the same line error taken into account, and 88.7% with the same line error ignored as shown in Figure 7.

In the above-mentioned embodying styles and embodiments, a behavior pattern model is generated for all detection ranges 20. Thus, the eight directions (1) to (8) are recognized. However, the present invention is not limited to this application, and the detection range 20 is divided into small ranges as shown in Figure 8, and a behavior pattern model is generated in each direction for each range, thereby combining the behavior pattern models and recognizing various behavior contents in the detection range 20 of an object-to-be-detected.

### <Second Embodiment>

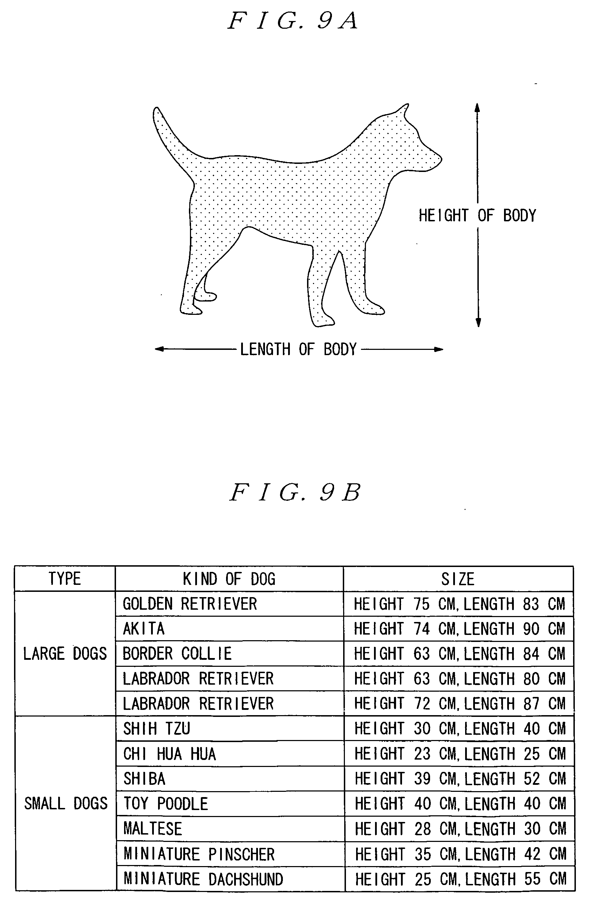

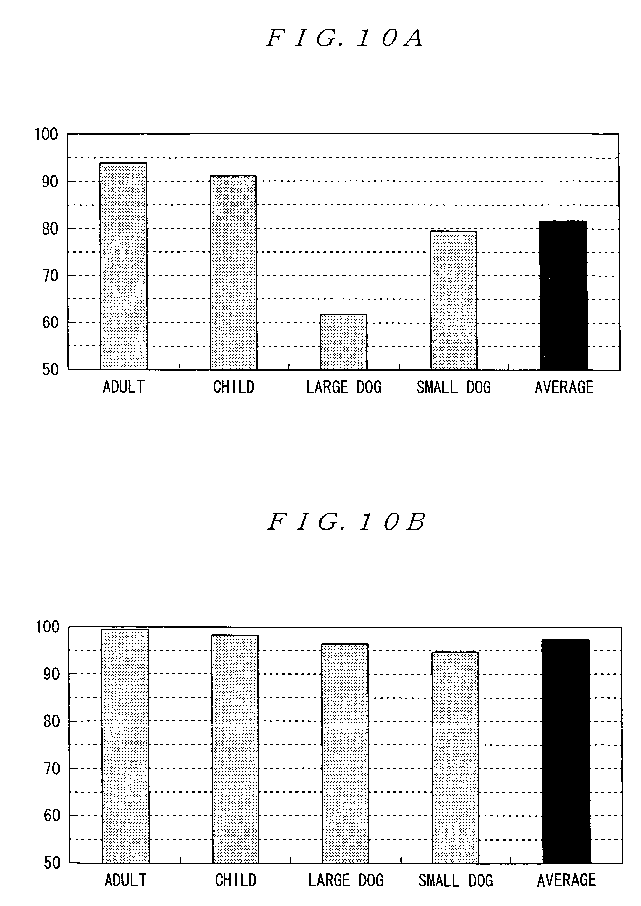

Furthermore, by referring to Figures 9A, 9B and 10, the second embodiment in which the information recognition device 1 according to the above-mentioned first style of embodiment is applied in classifying a person and an animal other than persons is explained below.

Figure 9A and Figure 9B show the information about a dog as an object-to-be-detected when an identifying process is performed.

Figure 10A shows the recognition results of a person (an adult discriminated from a child) and a dog (a large dog discriminated from a small dog). Figure 10B shows the recognition results of a person (without discriminating an adult from a child) and a dog (without discriminating a large dog from a small dog).

In the present embodiment, 42 persons (36 adults and 6 (kindergarten) children) and 12 dogs (5 large dogs and 7 small dogs) are selected as objects-to-be-detected. The data is obtained from these objects-to-be-detected performing 50 times the behaviors in the eight directions (1) to (8) in the above-mentioned first style of embodiment, thereby generating an HMM. In generating the HMM, calculating and using a common logarithm transformed from the first feature parameter in the first style of embodiment, and the second feature parameter in the first style of embodiment, and the number of internal states of the HMM is defined as seven.

The discrimination between a large dog and a small dog is performed by defining dogs including and larger than a dog of 63 cm high and 80 cm long such as a Labrador retriever as large dogs while defining dogs smaller than a dog of 40 cm high and 40 cm long such as a Toy poodle as small dogs as shown in Figure 9B. The height and the length can be respectively measured from the ground to the highest point of the body, and from the tip of the nose to the end of the tail when the dog stands straight as shown in Figure 9A.

In the present embodiment, the recognizing process is performed using four types of models, that is, the behavior pattern model for an adult generated using the behavior data of the 36 above-mentioned adults, the behavior pattern model for a child generated using the behavior data of the 6 above-mentioned children, the behavior pattern model for a large dog generated using the behavior data of the 5 above-mentioned large dogs, and the behavior pattern model for a small dog generated using the behavior data of the 7 above-mentioned small dogs. Each behavior pattern model is constituted by eight HMMs corresponding to the respective behavior patterns. When each model is generated, only ten pieces of training data (behavior data) out of fifty pieces for each behavior pattern is used. The remaining 40 pieces of data are evaluation data for use in the recognizing process.

For a person, discrimination is made between an adult and a child. For a dog, discrimination is made between a large dog and a small dog. In the information recognition device 1 using the generated behavior pattern model, the recognizing process in the behavior direction of each object-to-be-detected is performed. As a result, as shown in Figure 10A, the average recognition rate for an adult is 93.9%, the average recognition rate for a child is 91.1%, the average recognition rate for a large dog is 61.9%, and the average recognition rate for a small dog is 79.5%. The total average recognition rate is 81.6%. As a result, since the average recognition rate for a large dog is specifically low, the entire average recognition rate is 81.6% much lower than 90% although the average recognition rates for the adults and children exceed 90%.

Relating to the persons, adults are not discriminated from children, and the dogs are not discriminated between large dogs and small dogs, and the information recognition device 1 performs the recognizing process in the behavior direction of each object-to-be-detected. As a result, as shown in Figure 10B, the average recognition rate for adults is 99.6%, the average recognition rate for children is 98.4%, the average recognition rate for large dogs is 96.4%, and the average recognition rate for small dogs is 94.8%. Thus, the total average recognition rate is 97.3%. As a result, when the large and small dogs are discriminated, the average recognition rate for the large dogs is reduced largely because the large and small dogs are erroneously recognized. Since the recognition rate for the large dogs is dramatically improved, the entire average recognition rate is remarkably enhanced to 97.3%. Thus, it is determined that the information recognition device 1 according to the present invention can correctly identify persons from dogs (animals other than persons) at a high probability.

### <Second Style of Embodiment>

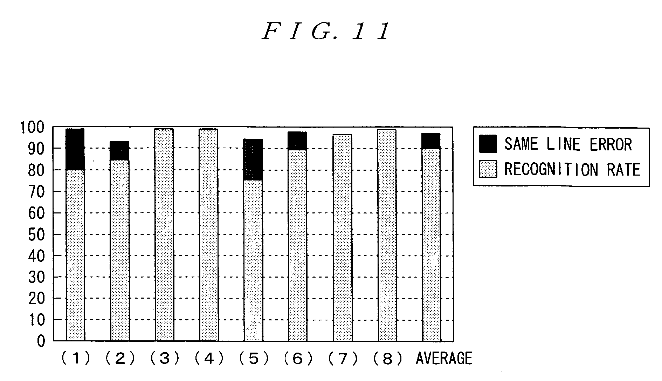

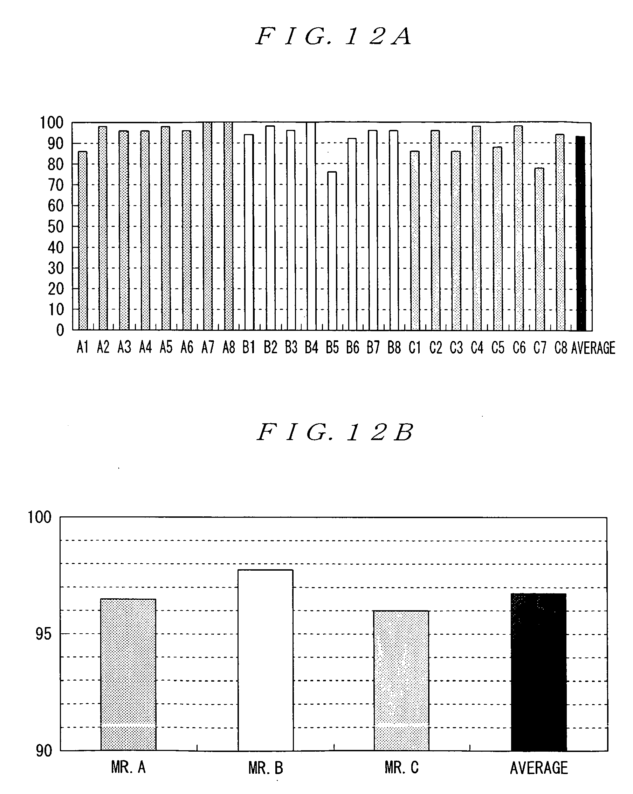

The second style of embodiment according to the present invention is further explained below. Figures 11, 12A and 12B show the result of the second style of embodiment of the information recognition device according to the present invention.

The difference from the above-mentioned first style of embodiment is that, in addition to the first and second feature data according to the first style of embodiment, the third and fourth feature data calculated from the first and second feature data is used as the feature data for use in the modeling and recognizing processes. Therefore, in the configuration similar to that of the first style of embodiment, since the behavior pattern model generating and recognizing processes are partly different, the portions similar to those according to the first style of embodiment are explained by referring to similar drawings.

In the present style of embodiment, as in the above-mentioned first style of embodiment, the analog output signal 30 of the data time length 10 (s) from the pyroelectric infrared sensor 10a is sampled at 100(ms) intervals in the signal processor 10b as shown in Figure 3. Furthermore, the A/D conversion is performed on the sampling data, thereby transforming the analog output signal 30 into digital data. The sampling data at the 100(ms) intervals is divided into plural frames 31 in a 1.6 (s) unit. Then, the FFT is performed on the sampling data in each unit of frame 31, these sampling data is expanded into the Fourier series, and the spectrum (the spectrum 32 shown in Figure 3) of each harmonic is calculated. Each frame 31 corresponds to 16 pieces of sampling data, and the overlap between the frames covers 12 pieces of sampling data. In this style of embodiment, the value N of the above-mentioned eight spectra 32 as the first half of each frame 31 is converted to the value of the common logarithm (log N), and is defined as the first feature data. Then, the average amplitude level is calculated for each frame, and is defined as the second feature data. The difference between the value of the first feature data for the frame 31 selected in all frames 31 and the value of the first feature data for the frame immediately before the selected frame is defined as the third feature data. The difference between the value of the second feature data for the frame 31 selected in all frames 31 and the value of the second feature data for the frame immediately before the selected frame is defined as the fourth feature data.

In this style of embodiment, the behavior pattern model generation unit 11 acquires the first to fourth feature data from the infrared detection unit 10, and generates an HMM using these pieces of feature data. In generating the HMM, the first to fourth feature data is set as the first to fourth parameters, the number of internal states is seven, that is, S₁ to S₇, and a single Gaussian is used as the probability distribution of each parameter. For example, the data corresponding to the action pattern taken five times for each behavior pattern of each attribute is used for the training of the HMM as in the first style of embodiment, and each behavior pattern is modeled for each attribute.

Furthermore, the behavior pattern model generated by the behavior pattern model generation unit 11 is related to the attribute (for example, the name) of an object-to-be-detected and the content of a behavior pattern, and is stored in the behavior pattern model storage unit 12.

Thus, when the behavior pattern models of plural objects-to-be-detected are completely generated, the recognition unit 13 afterwards performs the process of recognizing the behavior pattern of an object-to-be-detected and the attribute based on the signal processing result from the infrared detection unit 10.

Next, the process in step S114 in which the process contents are different from those in the first style of embodiment is explained by referring to the flowchart shown in Figure 4.

In step S114, the signal processor 10b performs the FFT in the frame unit, calculates a spectrum of each harmonic from the result of the FFT, and calculates the first to fourth feature data based on the calculated spectrum, thereby passing control to step S116.

In this style of embodiment, the value of the spectrum of each harmonic is transformed into the value of common logarithm and generates the first feature data, the average amplitude in a frame unit of each spectrum is calculated as the second feature data, the difference between the first feature data for the selected frame in all frames and the first feature data for the frame immediately before the selected frame is calculated as the third feature data, and the difference between the second feature data for the selected frame in all frames and the second feature data for the frame immediately before the selected frame is calculated as the fourth feature data.

Thus, the infrared detection unit 10 detects the infrared of plural objects-to-be-detected in the detection range 20, and performs signal processing on the output signal as a detection result, the behavior pattern model generation unit 11 generates a behavior pattern model corresponding to the contents of the behavior pattern of each obj ect-to-be-detected and the attribute of the obj ect-to-be-detected by the HMM from the signal processed detection result, and stores it in the behavior pattern model storage unit 12.

Then, the behavior pattern model generation unit 11 can generate a behavior pattern model using the first to fourth feature data.

The recognition unit 13 can recognize the behavior pattern and the attribute of an object-to-be-detected based on the infrared detection result by the infrared detection unit 10 of the object-to-be-detected operating in the detection range 20, and the behavior pattern model stored in the behavior pattern model storage unit 12.

The infrared detection unit 10 shown in Figure 1 corresponds to the thermal radiation detection means described in any of claims 1, 10, and 11. The behavior pattern model generation unit 11 corresponds the behavior pattern model generation means described in Figure 3. The behavior pattern model storage unit 12 corresponds to the behavior pattern model storage means described in any of claims 1, 2, and 10. The recognition unit 13 corresponds to the information recognition means described in claim 1 or 10.

### <Third Embodiment>

Furthermore, by referring to Figure 11, the third embodiment of the present invention in which the information recognition device 1 according to the above-mentioned second style of embodiment is applied to recognize the eight behavior directions (1) to (8) when the objects-to-be-detected A to Q pass in the above-mentioned detection range 20 similar to the above-mentioned first embodiment is explained below. In this embodiment, Figure 11 shows the recognition result in the behavior direction in the third embodiment.

In the present embodiment, the HMM in 7 states is generated using a feature parameter similar to that in the second style of embodiment. Also in this example, using the data obtained by asking 17 objects-to-be-detected A to Q to perform behaviors in the eight directions (1) to (8) five times in the above-mentioned first style of embodiment. However, in the present embodiment, when the HMM is generated for each behavior pattern, the attribute of an object-to-be-detected is ignored. When a behavior pattern model in each direction is generated, all data (85 pieces by the multiplication of 17 persons x 5 times) of the five-time behaviors of 17 persons in each direction is used.

That is, in the above-mentioned second style of embodiment, five pieces of data are used for each attribute in generating a behavior pattern model in each direction, thereby generating the HMM dedicated to each object-to-be-detected. In the present embodiment, using all data of 17 persons in each direction, the HMM corresponding to the behavior in each direction of the objects-to-be-detected of an indefinite number is generated.

In the information recognition device 1 in the above-mentioned second style of embodiment, using the generatedbehaviorpatternmodel, the average recognition rate in the behavior direction by the passage of the objects-to-be-detected A to Q in the detection range 20 is 90.3% with the same line error taken into account, and 97.0% with the same line error ignored as shown in Figure 11 as a result of performing the recognizing process. In the first embodiment, since the average recognition rate is 73.7% with the same line error taken into account, and 88.7% with the same line error ignored, the recognition rate has been largely enhanced in the process of generating and recognizing a behavior pattern model by implementing the third and fourth parameters as described in the second style of embodiment as compared with the recognition result in the first embodiment shown in Figure 7.

### <Fourth Embodiment>

Furthermore, by referring to Figure 11, the fourth embodiment of the present invention in which the information recognition device 1 according to the above-mentioned second style of embodiment is applied to recognize the eight behavior directions (1) to (8) when the objects-to-be-detected A to Q pass in the above-mentioned detection range 20 similar to the above-mentioned first embodiment is explained below. In this embodiment, Figure 12A and Figure 12B show the recognition result in the behavior direction in the fourth embodiment.

In the present embodiment, the HMM in 7 states is generated using a feature parameter similar to that in the second style of embodiment. Also in this example, using the data obtained by asking three persons A to C selected from among the 17 objects-to-be-detected A to Q to perform behaviors in the eight directions (1) to (8) fifty times in the above-mentioned first style of embodiment. However, in the present embodiment, when the HMM is generated for each behavior pattern, the attribute of an object-to-be-detected is considered. When a behavior pattern model in each direction is generated, all data (1200 pieces by the multiplication of 3 persons x 50 times x 8 directions) of the fifty-time behaviors of each of the persons Ato C in each direction is used, and eight HMMs in the respective directions of (1) to (8) above are generated for each of the persons A to C, and the eight HMMs for each person are used as the behavior patterns of each person.

In the information recognition device 1 in the second style of embodiment, using the generated behavior patternmodel, the average recognition rate of A in the behavior direction by the passage of the objects-to-be-detected A to C in the detection range 20 as shown in Figure 12A as a result of performing the recognizing process is 96.3%, the average recognition rate of B is 93.5%, the average recognition rate of C is 90.5%, and the total average recognition rate is 93.4%. That is, the total average recognition rate is a high recognition rate over 90%, and indicates that the present invention is effective with the identification of each person considered in addition to the identification in each behavior direction.

The result of the recognition of the person who has passed in the detection range 20 among the persons A to C with the behavior direction ignored indicates the average recognition rate of A as 96.5%, the average recognition rate of B as 97.8%, the average recognition rate of C as 96.8%, and the total average recognition rate as 96.8% as shown in Figure 12B. That is, as shown in Figure 12A, since the identification of a behavior direction depends on each person, the person can be recognized at a considerably high recognition rate by ignoring the behavior direction. Therefore, the present invention is greatly effective in identifying a person.

The height and weight of the objects-to-be-detected A to C are respectively "165 cm and 64 kg", "177 cm and 68 kg", and "182 cm and 68 kg", and each persons has his or her own way of walking. Therefore, there occur differences depending on each type of body and way of walking.

### <Third Style of Embodiment>

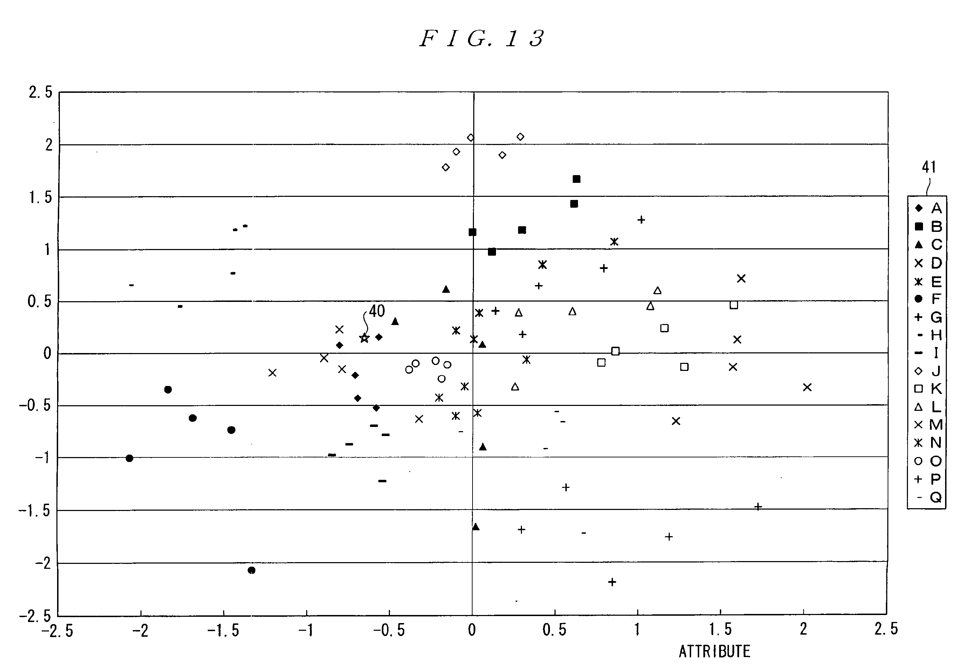

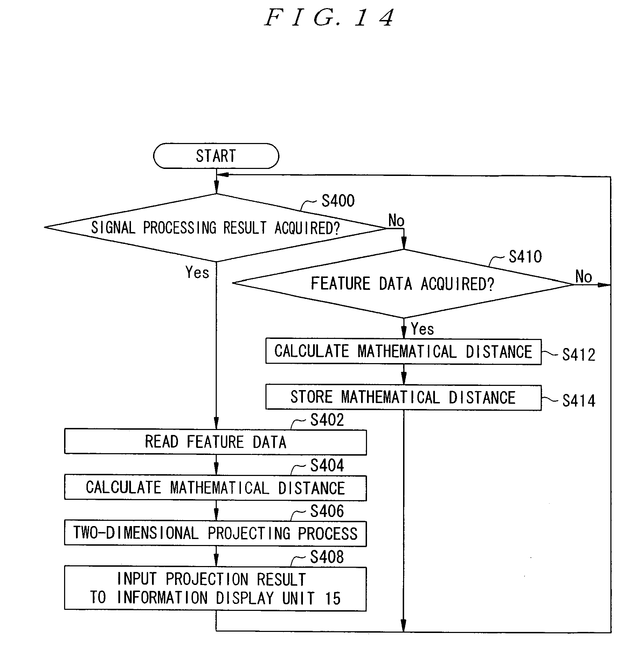

The third style of embodiment of the present invention is explained below by referring to the attached drawings. Figures 13 and 14 show the third style of embodiment of the information recognition device according to the present invention.

In this style of embodiment, the information recognition device 1 in the above-mentioned first and second types of embodiment is designed to display the feature data for the behavior to be recognized, and the feature data used in generating a behavior pattern model stored in the behavior pattern model storage unit 12 as the coordinate points in the two-dimensional space. In this case, for example, a two-dimensional projection unit and an information display unit are added to the information recognition device 1 shown in Figure 1 in the first and second styles of embodiments.

The two-dimensional projection unit has the function of calculating the mathematical distance between the first feature data and the mathematical distance between the first feature data and the second feature data based on the feature data (hereinafter referred to as the first feature data) at the time of generating a behavior pattern model and the feature data (hereinafter referred to as the second feature data) acquired from the infrared detection unit 10. Furthermore, it has the function of projecting the multidimensional feature data according to the two-dimensional coordinate information based on the calculated mathematical distance with the relationship between the calculated mathematical distances maintained.

In this style of embodiment, the Euclid distance between the feature data is calculated as a mathematical distance.

The feature data has multidimensional (four or more dimensional) information as described above, and in this style of embodiment, the two-dimensional projection unit projects the multidimensional information to the two-dimensional information using the well-known Sammons Method (refer to Jon W. Sammon, JR., "A Nonlinear Mapping for Data Structure Analysis", IEEE Trans. Computers, Vol. C-18, No. 5, May 1969).

Furthermore, the information display unit has the function of displaying the information about the projection result of the two-dimensional projection unit.

A practical operation is explained by referring to Figure 13. Figure 13 shows a display example of the feature data expressed in the two-dimensional projection. In this example, the first feature data is obtained as a result of five-time processes on the behavior patterns (1) to (8) described above for each of the persons A to Q in the first style of embodiment. Therefore, five pieces of feature data (coordinate point of the same shape shown in Figures 9A and 9B) is displayed in the two-dimensional projection for each of the persons A to Q on one behavior pattern.

The two-dimensional projection unit first calculates (for each process) the mathematical distance between the first feature data for the behavior pattern of five processes on the persons A to Q, and stores the result in the data storage unit not shown in the attached drawings.

Upon receipt of the signal processing result (second feature data) from the infrared detection unit 10, the mathematical distance between the second feature data and the first feature data is calculated based on the feature data and the feature data about the five processes of the persons A to Q. Then, the mathematical distance between the first feature data for A to Q stored in the data storage unit is read, and using the read data and the Sammons method on the mathematical distance between the first feature data and the second feature data to two-dimensionally project each piece of feature data with correlation of the mathematical distances maintained. The coordinate information generated in the two-dimensional projection is input to the information display unit.

The information display unit displays the acquired coordinate information using a coordinates point of a different shape for each attribute as shown in Figures 9A and 9B. In Figures 9A and 9B, coordinates 40 indicate the second feature data, and a frame 41 in Figure 4 shows the relationship between the shape of the respective coordinate points and A to Q. As shown in Figures 9A and 9B, the second feature data (star-shaped coordinate point) is displayed in the position closest to the black diamond shape of A. Therefore, the display contents of the coordinate pointing the two-dimensional projection show that the detection result is closest to the attribute A. That is, an operator, etc, sees the displayed contents of a coordinate point to recognize or predict the attribute (A in this case) of an object that has traversed the detection range 20.

The persons in the positions of similar coordinate points in the two-dimensional projection can be regarded as belonging to the same category, and by generating a behavior pattern model using the HMM, the categories of persons can be classified. There are various categories, and classification can be performed depending on the common features of persons in the close positions such as the way of walking, the body type, the walking speed, the walking direction, etc. The method can be applied not only to persons, but also to all objects emitting infrared, and can be applied in discriminating a person from an animal, and discriminating all objects.

Furthermore, by referring to Figure 14, the flow of the operating process of the two-dimensional projection unit is explained. Figure 14 is a flowchart of the operating process of the two-dimensional projection unit.

As shown in Figure 14, control is first passed to step S400, and it is determined whether or not a signal processing result of the infrared detection unit 10 has been acquired. If it is determined that the result has been acquired (YES), control is passed to step S402. Otherwise (NO), control is passed to step S410.

When control is passed to step S402, then feature data is read from the behavior pattern model storage unit 12, and control is passed to step S404. That is, the behavior pattern model storage unit 12 stores the first feature data.

In step S404, the mathematical distance is calculated based on the read feature data and the feature data of the signal processing result, and control is passed to step S406.

In step S406, the process of two-dimensionallyproj ecting the feature data by using the Sammon Method with the relation of the mathematical distance maintained based on the mathematical distance between the feature data stored in advance in the data storage unit and the calculated mathematical distance is performed, and control is passed to step S408.

In step S408, the information about the projection result is input to the information display unit, and control is passed to step S400.

On the other hand, when control is passed to step S410 without acquiring a signal processing result in step S400, it is determined whether or not the first feature data has been acquired. If it is determined that the data has been acquired (YES), control is passed to step S412. Otherwise (NO), control is passed to step S400.

When control is passed to step S412, the mathematical distance between the feature data is calculated, and control is passed to step S414.

In step S414, the calculated mathematical distance is stored in the data storage unit, and control is passed to step S400.

The process of displaying two-dimensional coordinates by the two-dimensional projection unit and the information display unit in this specification correspond to the feature data displaymeans and detection result displaymeans according to claim 15.

### <Fourth Style of Embodiment>

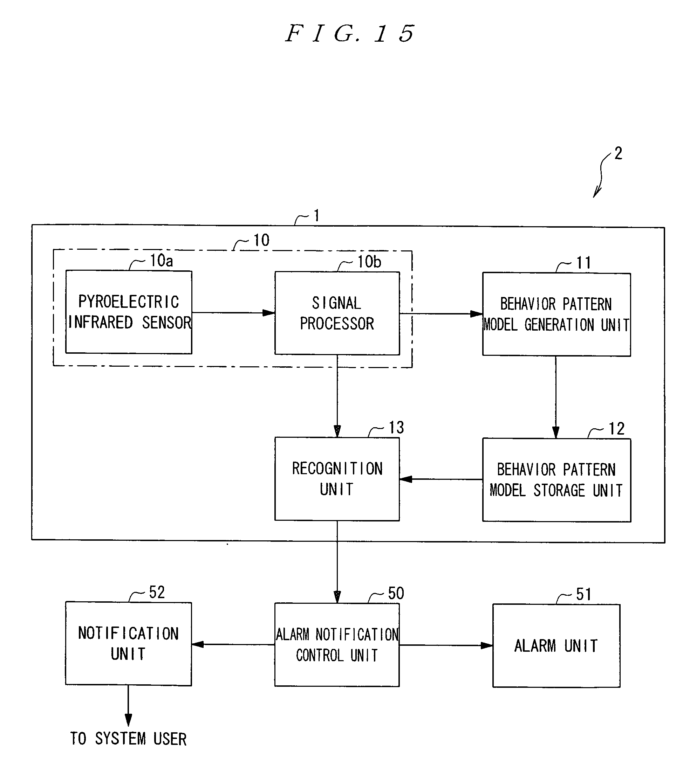

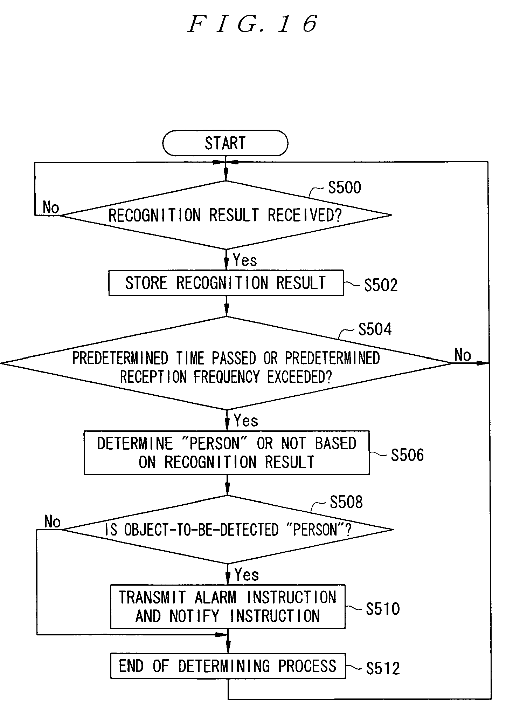

Further, the fourth style of embodiment of the present invention is explained by referring to the attached drawings. Figures 15 and 16 show the fourth style of embodiment of the information recognition device according to the present invention.

This style of embodiment relates to an alarm system having the information recognition device 1 in the above-mentioned first and second styles of embodiments. The information recognition device 1 recognizes a person or another animal. If it is determined from the recognition result that an invader in the detection range of the sensor is a person, an alarm is emitted. That is, the system is an application system using a recognition result of the information recognition device 1 according to the first and second styles of embodiments. Therefore, the overlapping portion between the first and second styles of embodiments are assigned the same reference numeral and the explanation is omitted. Only the different portions are explained.

First, the configuration of the alarm system according to the fourth style of embodiment is explained by referring to Figure 15. Figure 15 is a block diagram of the configuration of the alarm system relating to the fourth style of embodiment of the present invention.

An alarm system 2 includes the information recognition device 1, the alarm notification control unit 50 for controlling the emission of an alarm based on the recognition result from the information recognition device 1, an alarm unit 51 for emitting an alarm at an emission instruction from the alarm notification control unit 50, and a notification unit 52 for notifying a system user of the alarm content depending on a notify instruction from the alarm notification control unit 50.

In this style of embodiment, the behavior pattern model storage unit 12 stores a behavior pattern model generated for the behavior pattern of a person and a behavior pattern model generated for an animal other than a person such as a dog, a cat, etc.

The recognition unit 13 has the function of recognizing the behavior pattern information and the attribute information about an object-to-be-detected existing in the detection range of the pyroelectric infrared sensor 10a based on the storage contents of the behavior pattern model storage unit 12 and the feature data of the infrared detection result acquired from the infrared detection unit 10, and the function of transmitting the recognition result to the alarm notification control unit 20. In this style of embodiment, the feature data is compared with the behavior pattern model stored in the behavior pattern model storage unit 12 to recognize the object-to-be-detected to be a person or another object.

The alarm notification control unit 50 determines whether or not the object-to-be-detected is a person based on the recognition result from the recognition unit 13 of the information recognition device 1. When it is determined that the obj ect-to-be-detected is a person, the alarm notification control unit 50 transmits an instruction to issue an alarm to the alarm unit 51, and transmits to the notification unit 52 the instruction to notify a system user of the alarm contents (for example, the invasion of a person into a building, etc.). On the other hand, when the alarm notification control unit 50 determines that the obj ect-to-be-detected is an obj ect other than a person, it does not transmit the alarm instruction and the notify instruction to the alarm unit 51 and the notification unit 52, no alarm or notification is issued. The present invention is not limited to the above-mentioned configuration. That is, when it is determined that the object-to-be-detected is an object other than a person, a notify instruction is transmitted to the alarm unit 51, thereby allowing a system user to appropriately take action although the alarm notification control unit 50 makes erroneous determination.

When the recognition result continuously transmitted from the recognition unit 13 is "person, person, non-person, non-person, person, person, ..., non-person, person, person, person, person, non-person", for example, when the recognition of a person is continuously performed at or over a predetermined frequency (for example, three or more times), it is determined that the object-to-be-detected is a person, thereby reducing the erroneous determination results.

The alarm unit 51 has the function of outputting an alarm message by voice and a predetermined alarm from a speaker not shown in the attached drawings depending on the alarm instruction from the alarm notification control unit 50.

The notification unit 52 has the function of notifying a system user of the alarm contents through a network, etc. not shown in the attached drawings depending on the notify instruction from the alarm notification control unit 50.

Therefore, as described above, when it is determined that the object-to-be-detected is an object other than a person, no alarm or notification is issued.

In the present embodiment, the alarm system 2 includes, in addition to the information recognition device 1, a processor not shown in the attached drawings, RAM (random access memory), and a storage medium storing a dedicated program, and controls each unit by executing the dedicated program by the processor.

A storage medium is semiconductor storage medium such as RAM, ROM, etc., a magnetic storage medium such as an FD, an HD, etc., an optical reading system such as a CD, a CDV, and LD, a DVD, etc., and a magnetic/optical reading system such as an MO, etc. Regardless of the electronic, magnetic, optical and other reading methods, the storage medium can be any computer-readable storage medium.

The alarm system 2 uses the information recognition device 1 to recognize an invader (object-to-be-detected) into a building as a person or an obj ect other than a person by mounting the pyroelectric infrared sensor 10a provided for the information recognition device 1 near the entrance (a spot that is necessarily passed when a person enters the building) of a building such as a museum, a jewelry shop, etc. Based on the recognition result, the alarm notification control unit 50 determines whether or not the object-to-be-detected is a person. If it is determined that the object-to-be-detected is a person, the alarm unit 51 issues an alarm, and the notification unit 52 notifies a system user of the alarm contents. Therefore, when a "person" such as a burglar, etc. invades a building, it is recognized as a person, and a threat or an alarm can be issued by an alarm of an alarm unit 21, and the notification unit 52 notifies a system user of the invasion of the "person" into the building, thereby for example allowing a guard as a system user to rush to the spot and catch the burglar, or contacting the police to ask a policeman to rush to the spot, etc. On the other hand, when a "non-person" such as a dog, a cat, etc. invades a building, it can be regarded as a non-person, and a wasteful alarm or notification can be avoided.

Furthermore, by referring to Figure 16, the flow of the operating process of the alarm notification control unit 50 in the alarm system 2 is explained. Figure 16 is a flowchart of the operating process of the alarm notification control unit 50.

As shown in Figure 16, control is first passed to step S500, it is determined whether or not a recognition result has been received from the recognition unit 13. If it is determined that the result has been received (YES), control is passed to step S502. Otherwise (NO), the determining process is continued until the result is received.

When control is passed to step S502, the recognition result received in step S500 is stored in the storage unit not shown in the attached drawings, and control is passed to step S504.

In step S504, it is determined whether or not a predetermined time has passed from the reception of the first recognition result, or whether or not the number of received recognition results about the same object-to-be-detected has exceeded a predetermined value. If it is determined that the time has passed or the number has exceeded the value (YES), then control is passed to step S506. Otherwise (NO), control is passed to step S500.

When control is passed to step S506, the process of determining whether or not the object-to-be-detected is a person is performed depending on the recognition result about the object-to-be-detected stored in the storage unit, and control is passed to step S508. The process of determining whether or not the object-to-be-detected is a person is performed based on the frequency of continuously recognizing that the object-to-be-detected is a "person" as described above.

When control is passed to step S508, if it is determined as a determination result in step S506 that the object-to-be-detected is a person (YES), control is passed to step S510. Otherwise (NO), control is passed to step S512.

When control is passed to step S510, an alarm instruction is transmitted to the alarm unit 51, and a notify instruction is transmitted to the notification unit 52, thereby passing control to step S512.

In step S512, the recognition result stored in the storage unit is deleted, the determining process is terminated, and control is passed to step S500.

Thus, based on the recognition result of the information recognition device 1 in the first and second styles of embodiments, the alarm notification control unit 50 determines whether or not the object-to-be-detected is a person. If the object-to-be-detected is a person, the alarm unit 51 issues an alarm, the notification unit 52 notifies a system user of the alarm contents. When it is determined that the object-to-be-detected is an object other than a person, the alarm unit 51 does not issue an alarm and the notification unit 52 does not notify of the alarm contents, thereby avoiding a wasteful alarm or notification.

The alarm notification control unit 50 shown in Figure 15 corresponds to the determination means described in claim 18, and the alarm unit 51 and the notification unit 52 correspond to the alarm means described in claim 18.

In the first to third styles of embodiments, a person and an animal other than a person emitting thermal radiation is defined as an object-to-be-detected. However, in addition to them, a nonlife emitting thermal radiation can also be an object-to-be-detected.

In the first to third styles of embodiments, behavior pattern models are generated and the behavior pattern recognizing process is performed for the behavior patterns in the eight directions (1) to (8). However, the present invention is not limited to these applications. That is, behavior pattern models can be generated or the behavior pattern recognizing process can be performed for movements in various directions other than the eight directions and behavior patterns such as the movements of a part of a body of an object-to-be-detected.

In the first to third styles of embodiments, the name of an object-to-be-detected is exemplified as an attribute associated with a behavior pattern model. However, the present invention is not limited to this example. That is, other components such as the sex, age, height, weight, etc. can be associated, and plural components can be optionally combined and associated.

In the third style of embodiment, the multidimensional feature data is projected on the two-dimensional coordinate information. However, the present invention is not limited to this application, and multidimensional feature data can be projected on the three-dimensional coordinate information.

### Industrial Applicability

According to the information recognition device described in claim 1 of the present invention, based on the detection result of the thermal radiation sensor and the behavior pattern model, the predetermined information about the object-to-be-detected can be recognized. As a result, various types of information such as a complicated action pattern of an object-to-be-detected, the attribute of an object-to-be-detected, etc. can be recognized.

According to the information recognition device described in claim 2, in addition to the effects described in claim 1, the recognizing process can be performed based on plural behavior pattern models depending on plural types of behavior patterns and detection results. Therefore, various types of information about objects-to-be-detected in the detection range can be recognized.

According to the information recognition device described in claim 3, in addition to the effects in claim 1 or 2, a new behavior pattern model can be easily added, and since a behavior pattern model can be generated depending on a given condition, flexible action can be taken in changing a behavior pattern model by changing the contents of recognition.

According to the information recognition device described in claim 6, in addition to the effects described in any of claims 1 to 3, a pyroelectric infrared sensor is used as a thermal radiation sensor. Therefore, amobile obj ect in a detection range can be easily detected.

According to the information recognition device according to claim 7, in addition to the effects described in any of claims 1 to 6, by modeling the behavior pattern using the HMM as a probability model of a time series signal, an unsteady time series signal can be easilymodeled. Therefore, the behavior pattern of an object-to-be-detected can be appropriately modeled.

According to the information recognition device described in claim 8, in addition to the effects described in any of claims 1 to 7, since the output of the thermal radiation sensor changes depending on the action content, the moving speed, the size, etc., a behavior pattern model corresponding to them is generated in advance, thereby recognizing the action content of an object-to-be-detected, the moving speed, the size, etc.

Furthermore, according to the information recognition device described in claim 9, in addition to the effects described in any of claims 1 to 8, plural types of objects-to-be-detected are included as behavior pattern models. Therefore, the information recognition means can recognize the attribute information about the object-to-be-detected in the detection range.

According to the information recognition device described in claim 10, in addition to the effects described in any of claims 1 to 9, the likelihood between the feature data and the behavior pattern model is calculated. Based on the likelihood, the predetermined information relating to the object-to-be-detected is recognized, thereby easily recognizing predetermined information.

Additionally, according to the information recognition device described in claim 11, in addition to the effects described in claim 10, the likelihood of the behavior pattern model for the first feature data constituted by the spectrum in a frame unit of a detection result and the second feature data constituted by an average amplitude value of the spectrum in the frame unit is calculated, and the predetermined information relating to the object-to-be-detected is recognized based on the calculation result, thereby improving the recognition accuracy of the predetermined information.

According to the information recognition device described in claim 12, since the value of the spectrum in the frame unit is transformed into the value of a common logarithm as the first feature data, the recognition accuracy of the predetermined information can be furthermore improved depending on the condition.

Furthermore, according to the information recognition device described in claim 13, in addition to the first and second feature data, the third feature data constituted by the difference between the feature indicated by the first feature data of a selected frame and the feature indicated by the first feature data of the frame immediately before the selected frame is used to recognize the predetermined information. Therefore, the recognition accuracy of the predetermined information can be furthermore improved.

According to the information recognition device described in claim 14, in addition to the first to third feature data, the fourth feature data constituted by the difference between the feature indicated by the second feature data of the selected frame and the feature indicated by the second feature data of the frame immediately before the selected frame is used to recognize the predetermined information, thereby furthermore improving the recognition accuracy of the predetermined information.

According to the information recognition device described in claim 15, in addition to the effects described in any of claims 1 to 8, a detection result can be visually captured by comparing it with the feature data corresponding to the behavior patterns of other plural objects-to-be-detected, and predetermined information can be visually recognized.

The information recognition method described in claim 16 is realized by the information recognition device, etc. described in claim 1, and the applicability in industry overlaps between the claims. Therefore, the description is omitted here.

The information recognition program described in claim 17 is applicable to the information recognition device described in claim 1, and the applicability in industry overlaps between the claims. Therefore, the description is omitted here.

According to the security system described in claim 18 of the present invention, based on the recognition result of the information recognition device capable of recognizing various types of information such as a complicated action pattern of an object-to-be-detected, an attribute of the object-to-be-detected, discrimination between a person and an animal, etc. can be performed. Therefore, the present system can be used for guard of a building at a lower frequency of raising an erroneous alarm by mistakenly determining the invasion of an animal, etc. other than a person into a building.

## Claims

1. An information recognition device, comprising:
thermal radiation detection means for detecting, by a thermal radiation sensor, thermal radiation emitted from an object-to-be-detected existing in a detection range;
behavior pattern model storage means for storing a behavior pattern model obtained by modeling output of the thermal radiation sensor depending on a behavior pattern of an object-to-be-detected by using a predetermined modeling method; and
information recognition means for recognizing predetermined information relating to the object-to-be-detected existing in the detection range based on a detection result of the thermal radiation detection means and the behavior pattern model stored in the behavior pattern model storage means.

2. The information recognition device according to claim 1, wherein
the behavior pattern model storage means stores plural behavior pattern models depending on respective types of behavior patterns.

3. The information recognition device according to claim 1 or 2, further comprising:
behavior pattern model generation means for generating the behavior pattern model of the obj ect-to-be-detected based on the output of the thermal radiation sensor by using the predetermined modeling method.

4. The information recognition device according to any of claims 1 to 3, wherein
the thermal radiation sensor is a thermo-sensor.

5. The information recognition device according to any of claims 1 to 3, wherein
the thermal radiation sensor is a quantum sensor.

6. The information recognition device according to any of claims 1 to 3, wherein
the thermo-sensor is a pyroelectric infrared sensor for detecting infrared emitted from the object-to-be-detected using a pyroelectric effect.

7. The information recognition device according to any of claims 1 to 6, wherein
the predetermined modeling method is an HMM (hidden Markov model).

8. The information recognition device according to any of claims 1 to 7, wherein
the predetermined information comprises at least one of action contents of the object-to-be-detected, a moving speed of the object-to-be-detected, and a size of the object-to-be-detected.

9. The information recognition device according to any of claims 1 to 8, wherein
the predetermined information comprises attribute information about the object-to-be-detected.

10. The information recognition device according to any of claims 1 to 9, wherein
the information recognition means extracts feature data from a detection result of the thermal radiation detection means, calculates likelihood between the feature data and the behavior pattern model based on the feature data and the behavior pattern model stored in the behavior pattern model storage means, and recognizes predetermined information relating to the obj ect-to-be-detected based on the calculated likelihood.

11. The information recognition device according to claim 10, wherein
the feature data comprises first feature data constituted by a spectrum in a frame unit of a detection result of the thermal radiation detection means and second feature data constituted by an average amplitude value of the spectrum in the frame unit.

12. The information recognition device according to claim 11, wherein
the first feature data is obtained by transforming a value of the spectrum in the frame unit into a value of a common logarithm.

13. The information recognition device according to claim 11 or 12, wherein
the feature data further comprises third feature data constituted by a difference between feature indicated by the first feature data of a selected frame and feature indicated by the first feature data of the frame immediately before the selected frame.

14. The information recognition device according to claim 13, wherein
the feature data further comprises fourth feature data constituted by a difference between feature indicated by the second feature data of a selected frame and feature indicated by the second feature data of the frame immediately before the selected frame.

15. The information recognition device according to any of claims 1 to 14, wherein
when the behavior pattern model is constituted by the feature data of a high dimension of four or more, the device comprises:
feature data display means for displaying the feature data corresponding to each behavior pattern model stored in the behavior pattern model storage means as a coordinate point in a two- or three-dimensional space; and
detection result display means for displaying a coordinate point corresponding to a detection result of the thermal radiation detection means in a space in which the coordinate point of the feature data is displayed.

16. An information recognition method, comprising:
detecting, by a thermal radiation sensor, thermal radiation emitted from an object-to-be-detected existing in a detection range;
preparing a behavior pattern model obtained by modeling output of the thermal radiation sensor depending on plural types of behavior patterns of plural objects-to-be-detected by using a predetermined modeling method; and
recognizing predetermined information relating to the object-to-be-detected existing in the detection range based on a detection result of the thermal radiation sensor and the behavior pattern model.

17. An information recognition program executed by a computer, comprising:
a thermal radiation detecting step of detecting, by a thermal radiation sensor, thermal radiation emitted from an object-to-be-detected existing in a detection range;
a behavior patternmodel storing step of storing a behavior pattern model obtained by modeling output of the thermal radiation sensor depending on plural types of behavior patterns of plural objects-to-be-detected by using a predetermined modeling method; and
an information recognizing step of recognizing predetermined information relating to the object-to-be-detected existing in the detection range based on a detection result in the thermal radiation detecting step and the behavior pattern model stored in the behavior pattern model storing step.

18. An alarm system, comprising:
the information recognition device according to any of claims 1 to 15;
determination means for determining whether or not the object-to-be-detected is a person based on a recognition result of the information recognition device; and
alarm means for raising an alarm when the determination means determines that the object-to-be-detected is a person.
